# EUROPÄISCHE PATENTANMELDUNG

(11) **EP 4 085 751 A1**
(43) Veröffentlichungstag der Anmeldung: **09.11.2022**
(21) Anmeldenummer: 22171262.3
(22) Anmeldetag: 03.05.2022
(51) Int. Cl.: A01G 9/02, A01G 27/02

(54) **PFLANZANORDNUNG UND VERFAHREN ZUM ARRANGIEREN EINER PFLANZANORDNUNG**

(30) Priorität: 03.05.2021 DE 102021111372
(71) Anmelder: Greenling UG, 80997 München (DE)
(72) Erfinder: Leisch, Johanna, 80997 München (DE)
(74) Vertreter: Müller Schupfner & Partner Patent- und Rechtsanwaltspartnerschaft mbB

(57) **Zusammenfassung**

Es wird eine Pflanzanordnung (100) bereitgestellt, wobei die Pflanzanordnung umfasst: eine erste modulare Halteanordnung (2), insbesondere eine Kulisse, die mindestens eine Halterung (3) für die Aufnahme eines auswechselbaren Pflanzbehälters (1) aufweist, eine erste Tragstruktur (4) zum Tragen der ersten Halteanordnung (2), wobei die Tragstruktur (4) eine ersten Aufbewahrungseinheit für Wasser (5) auf-weist, die so an der Tragstruktur (4) angeordnet ist, dass die erste Aufbewahrungseinheit für Wasser (5) unterhalb der ersten Halteanordnung (2) angeordnet ist, und mindestens einen Pflanzbehälter (1) mit einer Bodenseite (41) und einer offenen Oberseite (42), wobei der Pflanzbehälter (1) an der Halterung (3) auswechselbar anbringbar ist, so dass sich die Bodenseite (41) unterhalb der Halteanordnung (2) befindet. Ferner wird ein Verfahren zum Arrangieren einer Pflanzanordnung (100) bereitgestellt.

## Beschreibung

Die vorliegende Erfindung betrifft eine Pflanzanordnung und ein Verfahren zum Arrangieren einer Pflanzanordnung.

Im Stand der Technik sind Blumentöpfe für Garten und Balkon bekannt, in die eine Pflanze direkt oder mit einem Pflanztopf eingebracht werden kann. Hierbei besteht das Problem, dass kein zufriedenstellendes Speichern von Wasser in dem Blumentopf möglich ist, da entweder die Pflanze im Wasser steht und dadurch schaden nimmt oder zu wenig Wasser zur Verfügung steht, so dass die Pflanze austrocknet. Um diesem Aspekt Rechnung zu tragen, gibt es wasserspeichernde Pflanztöpfe, in die die eine Pflanze zusammen mit Erde direkt eingesetzt wird. Dabei weist der Pflanzentopf oft einen zweiten Boden auf, der die Pflanze vom Wasserspeicher trennt aber dennoch einzelne Wurzeln der Pflanze passieren lässt. Somit kann das Problem der Wasserversorgung gelöst sein. Jedoch ist ein Austausch der Pflanze aufwendig und macht ein umständliches Hantieren mit Erde notwendig, da bei diesem System die Pflanze direkt in den Pflanztopf gesetzt werden muss. Somit ist diese Lösung ungeeignet für Innenräume oder den Balkon, da immer mit einer Verschmutzung der Umgebung zu rechnen ist. Ferner ist ein Umtopfen umständlich und mit erhöhtem Zeitaufwand verbunden. Zusätzlich ist ein nachträgliches Arrangieren von verschiedenen Pflanzen nur mit erheblichem Aufwand möglich.

Daher macht es sich die vorliegende Erfindung zur Aufgabe eine Pflanzanordnung bereitzustellen, bei der einzelne Pflanzen einfach und mit wenig Aufwand ausgetauscht werden können, aber dennoch ein Wasserspeicher vorhanden ist, so dass die Pflanze über einen längeren Zeitraum mit Wasser versorgt werden kann.

Die vorliegende Erfindung löst dieses Problem mit einer Pflanzanordnung mit den Merkmalen des Anspruchs 1 und einem Verfahren zum Arrangieren einer Pflanzanordnung mit den Merkmalen des Anspruchs 14.

Gemäß einem Aspekt der vorliegenden Erfindung wird eine Pflanzanordnung bereitgestellt, umfassend:
eine erste modulare Halteanordnung, insbesondere eine Kulisse, die mindestens eine Halterung für die Aufnahme eines auswechselbaren Pflanzbehälters aufweist,
eine erste Tragstruktur zum Tragen der ersten Halteanordnung, wobei die Tragstruktur eine ersten Aufbewahrungseinheit für Wasser aufweist, die so an der Tragstruktur angeordnet ist, dass die erste Aufbewahrungseinheit für Wasser unterhalb der ersten Halteanordnung angeordnet ist, und
mindestens einen Pflanzbehälter mit einer Bodenseite und einer offenen Oberseite, wobei der Pflanzbehälter an der Halterung auswechselbar anbringbar ist, so dass sich die Bodenseite unterhalb der Halteanordnung befindet.

Gegenüber dem bekannten Stand der Technik bietet die vorliegende Erfindung den Vorteil, dass Pflanzbehälter einfach und modulartig in die Halterung eingesetzt und herausgenommen werden können. Somit ist es besonderes einfach verschiedene Pflanzen in der Pflanzanordnung zu arrangieren und/oder auszutauschen. Trotzdem ist ein Wasserspeicher in Form der Aufbewahrungseinheit für Wasser bereitgestellt, so dass eine Versorgung der Pflanzen mit Wasser auch über einen längeren Zeitraum sichergestellt ist. Im Folgenden wird die Erfindung und Ausführungsformen davon mit Bezug auf einen einzelnen Pflanzbehälter erläutert. Nichtsdestotrotz gibt es Ausführungsformen, bei denen eine Vielzahl von Pflanzbehältern vorgesehen sind, die die im Folgenden dargestellten Merkmale ebenfalls alle oder teilweise aufweisen.

Gemäß einem Aspekt der Erfindung umfasst ein Pflanzbehälter zumindest eine Pflanze zusammen mit Erde und/oder einem Substrat. Der Pflanzbehälter ist dabei ein formstabiler Behälter mit einem mehreckigen Querschnitt. Somit kann der Pflanzbehälter in einer vorbestimmten Position in der Halterung gehalten sein. Ferner kann der Pflanzbehälter verdrehsicher in der Halterung gehalten sein. Alternativ hat der Pflanzbehälter einen geschwungenen oder runden Querschnitt. Somit kann der Pflanzbehälter beliebig gedreht werden und vielfältig arrangiert werden, um ein Platzangebot optimal auszunutzen. Vorzugsweise weist der Pflanzbehälter an seiner Oberseite einen Kragen auf, so dass der Pflanzbehälter sicher von der Halterung gehalten werden kann. Der formstabile Behälter ist insbesondere so ausgestaltet, dass Wasser aus der Aufbewahrungseinheit zu einer in dem Pflanzbehälter aufgenommenen Pflanze gelangen kann. Beispielsweise ist der Pflanzbehälter zumindest stellenweise aus einem wasserdurchlässigen Material gebildet oder weist Wasserdurchtrittsöffnungen auf.

Gemäß einem anderen Aspekt der Erfindung ist der Pflanzbehälter aus einem nicht formstabilen Material wie beispielsweise einem Gewebe, Leinen oder Vlies gebildet. Somit ist sichergestellt, dass ein einfache Versorgung der Pflanze in dem Pflanzbehälter mit Wasser ermöglicht ist. Im Falle eines nicht formstabilen Pflanzbehälters kann dieser einen Haltering aufweisen, von dem sich das Gewebe, Leinen oder Vlies erstreckt. Der Haltering wirkt dann so mit der Halterung zusammen, dass der Pflanzbehälter an der Halterung gehalten ist.

Gemäß einem weiteren Aspekt der Erfindung ist die Halteanordnung ein gitterartiges Element mit einer Vielzahl von Öffnungen. Alternativ ist die Halteanordnung ein plattenartiges Element, in dem eine Vielzahl von Halterungen beispielsweise in Form von Öffnungen ausgebildet ist. In zumindest einige der Öffnungen ist ein Pflanzbehälter einsetzbar. Dadurch kann die Halteanordnung modular mit Pflanzbehältern bestückt werden. Dies bietet den Vorteil, dass einzelne Pflanzbehälter ausgetauscht werden können und/oder nicht alle zur Verfügung stehenden Öffnungen bestückt werden müssen. Vorzugsweise ist die Halterung durch einen Rand der jeweiligen Öffnung gebildet. Insbesondere liegt der Kragen des Pflanzbehälters an dem Rand der Öffnung, in die der Pflanzbehälter eingesetzt ist, auf. Alternativ ist der formstabile Pflanzbehälter durch eine kontinuierliche Vergrößerung seines Querschnitts zwischen Bodenseite und Oberseite in einer vorbestimmten Höhenposition durch die Halterung der Halteanordnung getragen. Somit kann auf einfache Weise (d.h. durch Ausgestaltung des Pflanzbehälters) bestimmt werden, wie weit der Pflanzbehälter beispielsweise in die Aufbewahrungseinheit für Wasser hineinreicht. Folglich kann abhängig davon, ob die in dem Pflanzbehälter aufgenommene Pflanze viel Wasser oder wenig Wasser benötigt, der Pflanzbehälter entsprechend ausgestaltet sein, um das Arrangieren der Pflanzanordnung noch weiter zu vereinfachen. Insbesondere ist der Pflanzbehälter ausschließlich hängend durch die Halterung getragen. Mit anderen Worten steht der Pflanzbehälter nicht auf (z.B. weder auf die Aufbewahrungseinheit für Wasser noch auf die Tragstruktur). Dadurch kann eine vorteilhafte Belüftung und/oder Wasserversorgung der Wurzeln der Pflanze in dem Pflanzbehälter sichergestellt werden. Vorzugsweise weist die erste Halteanordnung neun Halterungen auf, so dass neun Pflanzbehälter an der Halteanordnung vorgesehen werden können. In einer Ausführungsform sind die Halterungen in einer Rechteckform angeordnet mit drei Halterungen in einer ersten Richtung und drei Halterungen in einer zu der ersten Richtung orthogonalen zweiten Richtung. Die Halterungen sind vorzugsweise Symmetrisch zu einer Achse, die parallel zu der ersten Richtung und/oder der zweiten Richtung verläuft und in einer Draufsicht auf das Halteanordnung durch deren Mittelpunkt läuft, angeordnet. Es wurde herausgefunden, dass in diesem Fall die Halteanordnung besonders Widerstandsfähig gegen Durchbiegung ist was die Lebenserwartung der gesamten Pflanzanordnung erhöht. In einer Ausführungsform weist zumindest eine Halterung eine individuelle Form auf, so dass nur dazu passende Pflanzbehälter in diese Halterung eingesetzt werden können. Die individuelle Form ist beispielsweise ein Vieleck mit ungleich langen Kanten. Dadurch kann zum einen Sichergestellt sein, dass Pflanzbehälter nur in einer vorbestimmten Ausrichtung an der Halterung angebracht werden können und/oder dass nur ganz bestimmte Pflanzbehälter in die Halterung eingesetzt werden können. Somit kann es einem Nutzer noch einfacher gemacht werden, die Pflanzbehälter in einer korrekten vorbestimmten Art und Weise an der Pflanzanordnung zu arrangieren.

In einer zu bevorzugenden Ausführungsform ist ein Verhältnis der Fläche der Halteanordnung zu der Fläche der zumindest einen Halterung in einem Bereich von 5 bis 13. Somit ist sichergestellt, dass der Pflanzbehälter sicher durch die Halteanordnung gehalten werden kann, da die Materialstärke der Halteanordnung ausreichend groß ist. Vorzugweise liegt das obige Verhältnis in einem Bereich zwischen 7 und 11. In diesem Bereich ist ein besonders effizienter Materialeinsatz erreicht was die Herstellungskosten senkt.

Gemäß einem Aspekt der Erfindung ist die Tragstruktur ein Element, das die Halteanordnung trägt beispielsweise auf einem bestimmten Höhenniveau. Dabei ist die Tragstruktur entweder auf einer Oberfläche abstellbar oder an sonstigen Elementen anbringbar. Beispielsweise ist die Tragstruktur ein an einem Fenster und/oder Balkon anbringbare Tragstruktur. Demgemäß kann die Tragstruktur eine Halterung umfassen, die dazu ausgestaltet ist, die Pflanzanordnung an einem Balkon festzulegen, so dass die Pflanzanordnung keinen direkten Kontakt mit dem Boden hat. Gemäß einem Aspekt der Erfindung umfasst die Tragstruktur ein behälterartiges Element an dessen Öffnung die Halteanordnung anbringbar ist. Dabei ist das behälterartige Element durch massive flächige Wände und/oder durch einzelne Streben gebildet. Somit definiert die Tragstruktur einen Innenraum, in die der in die Halteanordnung eingesetzte Pflanzbehälter hineinragt. Vorzugsweise weist die Tragstruktur einen runden oder eckigen Grundriss auf, so dass eine quaderförmiger oder zylinderförmiger Körper gebildet ist. Dadurch kann eine hohe Standfestigkeit der Tragstruktur gewährleistet werden. Vorzugsweise weist die Tragstruktur eine Grundfläche auf, über der das Halteelement gehalten ist. Dabei ist die Halteanordnung parallel zu der Grundfläche angeordnet. Alternativ ist die Halteanordnung geneigt zu der Grundfläche, um eine optimale Raumausnutzung bereitzustellen. Gemäß einem Aspekt der Erfindung ist die Ausrichtung der Halteanordnung zu der Grundfläche variable. So kann die Halteanordnung beispielsweise hinsichtlich der Grundfläche variabel geneigt werden. Somit können die in der Halteanordnung angeordneten Pflanzen optimal zu Sonne ausgerichtet werden und/oder besonders platzsparend arrangiert werden. Um eine solche variable Neigung zu realisieren, weist die Tragstruktur zumindest ein Gelenk auf. Gemäß einem Aspekt der Erfindung ist die die Tragstruktur aus einem Kunststoffverbundstoff gebildet. Alternativ ist sie aus Plexiglas, einem Metall (beispielsweise Aluminium) oder sonstigen Kunststoffen gebildet.

Vorzugsweise ist ein Verhältnis der längsten Kantenlänge oder des Radius der Grundfläche und des größten Abstands zwischen der Grundfläche und der Halteanordnung in einem Bereich von 2 bis 3, vorzugsweise bei ca. 2,5. Somit kann ein sicherer Stand der Pflanzanordnung sichergestellt werden auch beispielsweise bei heftigen Winden oder Sturmböen.

Gemäß einem weiteren Aspekt der Erfindung ist die Aufbewahrungseinheit für Wasser in oder an der Tragstruktur angeordnet. Vorzugsweise ist die Aufbewahrungseinheit so angeordnet, dass der Pflanzbehälter zumindest mit seiner Bodenseite in die Aufbewahrungseinheit hineinreicht. In dem Fall, bei dem die Tragstruktur ein körperartiges Element ist, ist die Aufbewahrungseinheit für Wasser in dessen Innerem ausgebildet. Alternativ ist die Aufbewahrungseinheit für Wasser so unterhalb der zumindest einen Halterung angeordnet, das von einem Pflanzbehälter abtropfendes Wasser von der Aufbewahrungseinheit aufgefangen werden kann. Somit wird verhindert werden, dass ungewünschtes Wasser zu Verunreinigungen und/oder Schäden an anderen Gegenständen führt. Vorzugsweise weist die Aufbewahrungseinheit einen Überlauf auf, über den Wasser bei überschreiten eines bestimmten Wasserstands aus der Aufbewahrungseinheit abgeführt werden kann. Somit kann verhindert werden, dass die Pflanzen zu tief in dem Wasser stehen und dadurch Schaden nehmen. Der Überlauf kann als ein passiver Überlauf ausgestaltet sein. Mit anderen Worten weist der Überlauf keine steuerbaren oder beweglichen Komponenten auf. Somit kann der Überlauf sehr einfach und verschleißarm realisiert sein. Vorzugsweise ist der Überlauf so ausgestaltet, dass der Wasserspiegel in der Aufbewahrungseinheit für Wasser auf eine Höhe von 1/10 des mittleren Abstands zwischen Grundfläche und Halteanordnung beschränkt ist. In diesem Fall kann eine besonders kompakte Pflanzanordnung bereitgestellt werden, bei der eine sichere Versorgung der Pflanzen mit Wasser sichergestellt ist.

Gemäß einem Aspekt der Erfindung weist die Tragstruktur und/oder die Halteanordnung zumindest einen Auflageabschnitt auf, der oder die dazu ausgestaltet ist/sind, ein Möbelstück, insbesondere einen Tisch, eine Bar, eine Sitzbank oder ein Regal, zu halten, so dass das Möbelstück von der Pflanzanordnung getragen ist. Vorzugsweise ist der Auflageabschnitt ein strukturelles Element, das dazu geeignet ist eine Last aufzunehmen. Vorzugsweise ist der Auflageabschnitt eine abschnittsweise Verbreiterung der Tragstruktur, so dass die Tragstruktur zusätzlich zu der Halteanordnung auch noch das Möbelstück tragen kann. Dabei ist der Auflageabschnitt mit einem Stützelement direkt mit dem Untergrund (beispielsweise mit der Grundfläche der Tragstruktur) verbunden, so dass die Last des Möbelstücks vorteilhaft auf den Untergrund abgetragen werden kann. Dabei kann der Auflageabschnitt so ausgestaltet sein, dass das Möbelstück oberhalb der Pflanzanordnung (in einer Betriebsstellung) gehalten ist. In einer Ausführungsform weist die Tragstruktur vier Auflageabschnitte auf. Somit ist ein sicherer Stand des Möbelstücks sichergestellt. Alternativ ist der zumindest eine Auflageabschnitt an der Halteanordnung gebildet. Dies bietet den Vorteil, dass das Möbelstück kleiner sein kann als das Tragelement und trotzdem von der Pflanzanordnung getragen werden kann. Vorzugsweise ist auch in diesem Fall jedem Auflageabschnitt ein Stützelement zugeordnet, so dass die Last vorteilhaft auf einen Untergrund übertragen werden kann, so dass sich die Halteanordnung nicht übermäßig verformt.

Durch die Möglichkeit ein Möbelstück mit der Pflanzanordnung zu kombinieren bietet sich der Vorteil, selbst auf beengten Platzverhältnissen wie beispielsweise einem Balkon einer Stadtwohnung sowohl Möbelstücke als auch eine Pflanzanordnung unterbringen zu können. Ferner wird dadurch dem Wunsch vieler Menschen entsprochen, ein Möbelstück mit lebenden Pflanzen zu verbinden.

Gemäß einem Aspekt der Erfindung ist ein elektronischer Sensor an der Tragstruktur angeordnet und dazu ausgestaltet, Wasser, insbesondere einen Wasserstand, in der Aufbewahrungseinheit für Wasser zu erfassen. Vorzugsweise ist der elektronische Sensor ein Feuchtigkeitssensor, der dazu ausgestaltet ist, Wasser zu erkennen. Damit kann festgestellt werden, ob Wasser in der Aufbewahrungseinheit vorhanden ist oder nicht. Vorzugsweise umfasst die Pflanzanordnung eine Ausgabeeinheit, die einem Nutzer mitteilen kann, ob Wasser in der Aufbewahrungseinheit vorhanden ist oder nicht. Somit kann verhindert werden, dass die Aufbewahrungseinheit unbemerkt trockenfällt. Insbesondere ist der Sensor ein Leitwertsensor mit zumindest zwei Elektroden. Die Elektroden können an unterschiedlichen Höhenpositionen in der Aufbewahrungseinheit angeordnet sein. Somit kann durch Erfassen einer Änderung der Leitfähigkeit an den jeweiligen Elektrode (beispielsweise durch eine Steuereinheit) bestimmt werden wie hoch der Wasserspiegel in der Aufbewahrungseinheit ist. Alternativ ist ein Schwimmkörper in der Aufbewahrungseinheit angeordnet, so dessen Position Rückschlüsse auf den Wasserstand in der Aufbewahrungseinheit zulässt. Dazu ist der Schwimmkörper beispielsweise über ein Gestänge mit einem elektronischen Sensor verbunden. Somit kann dem Nutzer zudem mitgeteilt werden wie viel Wasser noch in der Aufbewahrungseinheit vorhanden ist. Zur Stromversorgung des elektronischen Sensors weist die Pflanzanordnung eine Energiequelle (beispielsweise eine Batterie oder Akkumulator) oder einen Netzanschluss auf.

Gemäß einem weiteren Aspekt der Erfindung weist die Halteanordnung zumindest einen Bewässerungszugang auf, über den der Aufbewahrungseinheit für Wasser, insbesondere direkt, Wasser zugeführt werden kann. Vorzugsweise weist die Halteanordnung nur einen einzigen Bewässerungszugang auf, über den die Aufbewahrungseinheit für Wasser direkt mit Wasser befüllt werden kann. Somit ist eine schonende Bewässerung der in den Pflanzbehältern aufgenommenen Pflanzen von unten möglich. Damit ist die Gefahr verringert, die Pflanzen durch ein Bewässern von oben zu schädigen. Durch das Vorsehen nur eines einzelnen Bewässerungszugangs auch bei dem Vorhandensein von einer Vielzahl von Pflanzbehältern, kann eine effiziente Bewässerung aller Pflanzen auf einmal sichergestellt sein. Somit ist die Pflege der Pflanzen besonders einfach. Insbesondere ist der Bewässerungszugang ein Durchgangsloch durch die Halteanordnung und stellt eine Verbindung zwischen der Umgebung und der Aufbewahrungseinheit für Wasser her. Vorzugsweise befindet sich der Bewässerungszugang ein einer Ecke der Halteanordnung und ist somit teilweise von der Halteanordnung und teilweise von der Tragstruktur umgeben. Somit Lässt sich der Bewässerungszugang besonders einfach herstellen.

Gemäß einem Aspekt der Erfindung verkleinert sich ein Querschnitt des zumindest einen Pflanzbehälters von der Oberseite zu der Bodenseite des Pflanzbehälters. Der Querschnitt ist vorzugsweise parallel zu der Oberseite und/oder Bodenseite des Pflanzbehälters. Da der Pflanzbehälter eine konstante Wandstärke aufweise, betrifft eine Querschnittsänderung des Pflanzbehälters sowohl die innere Form des Pflanzbehälters als auch die äußere. Somit kann der Pflanzbehälter auf besonders einfach Weise hängend in der Halterung der Halteanordnung gehalten werden. Zudem ist so sichergestellt, dass die Halterung, durch das Einsetzen des Pflanzbehälters gut abgedichtet ist. Somit kann verhindert werden das unangenehme Gerüche aus dem Inneren der Tragstruktur nach außen gelangen.

Gemäß einem weiteren Aspekt der Erfindung umfasst der mindestens eine Pflanzbehälter ein erdloses Substrat und/oder ein Drainagematerial. Vorzugsweise ist der Pflanzbehälter vollständig mit erdlosem Substrat und/oder Drainagematerial gefüllt und umfasst bereits eine oder mehrere Pflanzen, so dass der Pflanzbehälter lediglich in die Pflanzanordnung eingebracht werden muss. Folglich ist durch den Nutzer kein Umtopfen, Einpflanzen und dergleichen notwendig. Das erdlose Substrat liefert zudem den Vorteil, dass es keine unerwünschten Insekten wie Fruchtliegen oder dergleichen anzieht. Das Drainagematerial umfasst beispielsweise Blähtonkugeln, Kies, Splitt oder dergleichen. Alternativ ist ein Drainageflies an der Bodenseite des Pflanzbehälters vorgesehen. In einer weiteren Alternative weist der Pflanzbehälter einen doppelten Boden auf, so dass zwischen der Bodenseite und der Oberseite ein Trennboden eingefügt ist, der lediglich einige der Wurzeln der Pflanze in Richtung der Bodenseite passieren lässt, die übrige Pflanze aber stets oberhalb des in der Aufbewahrungseinheit vorhandenen Wassers hält. Bei jeder der obigen Ausführungsformen kann erreicht werden, dass die Pflanze keinen Schaden durch Stauwasser nimmt.

Gemäß einem Aspekt der Erfindung umfasst der zumindest eine Pflanzbehälter eine Wasserschale und/oder ein Bienenhaus, wobei die Wasserschale und/oder das Bienenhaus vorzugsweise integral mit dem Pflanzbehälter gebildet ist/sind. Somit kann durch Austauschen des Pflanzbehälters nicht nur Pflanzen variiert werden, sondern auch andere Elemente, die Vögel oder andere nützliche Insekten anlocken. Somit ist die Variationsvielfalt der Pflanzanordnung weiter erhöht. Dadurch, dass diese Elemente vorzugsweise integral mit dem Pflanzbehälter ausgebildet sind, erleichtert dies den Austausch. So kann beispielsweise ohne weiteres ein jahreszeitlich angepasste Pflanzanordnung zusammengestellt werden ohne, dass aufwendige umbauten oder Ergänzungen nötig sind.

Gemäß einem weiteren Aspekt der Erfindung weist der Pflanzbehälter zumindest eine Seitenwand zwischen der Bodenseite und der Oberseite des Pflanzbehälters auf, an der Öffnungen vorgesehen sind, durch die Wasser hindurchtreten kann. Somit kann ein verbesserter Wassertransport von der Aufbewahrungseinheit für Wasser in den Pflanzbehälter hinein realisiert werden. Dies ist insbesondere vorteilhaft, wenn der Pflanzbehälter aus einem formstabilen Material wie beispielsweise Kunststoff gebildet ist. Die Öffnungen sind längliche Schlitze, die sich von der Bodenseite in Richtung der Oberseite erstrecken. Alternativ sind die Öffnungen runde Durchgangslöcher, die gleichmäßig verteilt an der zumindest einen Seitenwand des Pflanzbehälters angeordnet sind. Dabei haben die Schlitze vorzugsweise eine breite von weniger als 5 mm oder die Durchgangslöcher einen Radius von weniger als 5 mm. Somit kann ist sichergestellt, dass kaum Erde, Substrat oder Drainagematerial von dem Pflanzbehälter in das Aufbewahrungselement für Wasser gelangt aber trotzdem ausreichend Wasser von dem Aufbewahrungselement in den Pflanzbehälter. Vorzugsweise befinden sich die Öffnungen ausschließlich im unteren Drittel der Gesamterstreckung des Pflanzbehälters von der Bodenseite zu der Oberseite. Damit ist eine optimale Verteilung von Platz für die Pflanze und Platz für wasseraufnehmendes Material in dem Pflanzbehälter realisiert.

Gemäß einem weiteren Aspekt der Erfindung sind zumindest zwei Pflanzbehälter vorgesehen, die ein unterschiedliches Volumen aufweisen. Somit können eine Vielzahl von unterschiedlichen Pflanzen mit unterschiedlichen Anforderungen an den Platz in der Pflanzanordnung arrangiert werden. Insbesondere können die Pflanzbehälter dieselbe Erstreckung zwischen Oberseite und Bodenseite aufweisen aber einen unterschiedlichen Querschnitt parallel zu der Oberseite und/oder Bodenseite. Somit ist gewährleistet, dass jeder Pflanzbehälter bis in die Aufbewahrungseinheit für Wasser reicht, obwohl er ein kleineres Volumen aufweisen kann. Alternativ kann eine Erstreckung der Pflanzbehälter zwischen der Oberseite und der Bodenseite unterschiedlich sein. Somit kann abhängig von der in dem Pflanzbehältern aufgenommenen Pflanze, eine Eintauchtiefe in die Aufbewahrungseinheit für Wasser variiert werden. Durch die individuelle Abstimmung der Ausgestaltung des Pflanzbehälters auf die darin aufgenommene Pflanze, ist es mögliche optimale Bedingungen für die Pflanze bereitzustellen, ohne dass es für den Nutzer mit einem erhöhten Aufwand verbunden ist.

Gemäß einem Aspekt der Erfindung umfasst die Pflanzanordnung ferner eine zweite modulare Halteanordnung, insbesondere eine Kulisse, die mindestens eine zweite Halterung für die Aufnahme eines auswechselbaren Pflanzbehälters aufweist, eine zweite Tragstruktur zum Tragen der zweiten Halteanordnung, und mindestens einen Pflanzbehälter mit einer Bodenseite und einer offenen Oberseite, wobei der Pflanzbehälter an der zweiten Halterung auswechselbar anbringbar ist, so dass sich die Bodenseite unterhalb der zweiten Halteanordnung befindet, wobei die zweite Tragstruktur von der ersten Tragstruktur und/oder der ersten Halteanordnung getragen ist. Vorzugsweise haben die zweite Tragstruktur, die zweite Halteanordnung und/oder die zweite Halterung zumindest teilweise dieselben Ausgestaltungen wie die oben beschrieben erste Tragstruktur, erste Halteanordnung und/oder erste Halterung. Somit besteht die Möglichkeit die Pflanzanordnung weiter zu individualisieren und eine zweite Tragstruktur mit einer zweiten Halteanordnung an beliebigen Stellen der ersten Tragstruktur und/oder der ersten Halteanordnung anzubringen. Soll die zweite Tragstruktur beispielsweise in der Mitte der ersten Halteanordnung angebracht werden, so wird die zweite Tragstruktur von der ersten Halteanordnung getragen. Soll alternativ die zweite Tragstruktur in einem Randbereich der ersten Halteanordnung angebracht werden, so wird die zweite Tragstruktur von der ersten Tragstruktur gehalten. So bietet sich eine Vielzahl von Möglichkeiten wie die zweite Tragstruktur an einer der obigen Pflanzanordnungen angebracht werden kann.

Gemäß einem weiteren Aspekt der Erfindung sind die zweite Halteanordnung und die erste Halteanordnung so gehalten, dass sie sich auf unterschiedlichen Höhen befinden. Folglich können unterschiedliche Ebenen durch die Halteanordnungen definiert werden. Dies bietet den Vorteil, dass unterschiedliche Pflanzen beispielsweise mit unterschiedlichem Lichtbedarf optimal arrangiert werden können. Ferner können auch hängende Pflanzen an der oberen Ebene (d.h. oberen Halteanordnung) vorgesehen werden und von dort hinunter wachsen. Insgesamt kann durch die Anordnung der Halteanordnungen auf unterschiedlichen Höhen eine Vielzahl von neuen Arrangiermöglichkeiten bereitgestellt werden. Vorzugsweise weist die erste Halteanordnung neun Halterungen in einer rechteckigen Anordnung auf (in einer Draufsicht auf die Halteanordnung). In der mittleren Halterung ist dabei die zweite Tragstruktur gehalten. Die zweite Tragstruktur trägt wiederrum eine zweite Halteanordnung, die nur eine Halterung oder mehrere Halterungen (beispielsweise vier) aufweist. In diesem Fall kann die Last gleichmäßig auf die erste Tragstruktur wirken, wodurch die Pflanzanordnung einen sicheren Stand aufweist. Gemäß einem Aspekt der Erfindung haben die zweite Tragstruktur, die zweite Halteanordnung und/oder die zweite Halterung dieselben Ausgestaltungen wie die oben beschrieben erste Tragstruktur, erste Halteanordnung und/oder erste Halterung.

Gemäß einem Aspekt der Erfindung weist die zweite Tragstruktur eine zweite Aufbewahrungseinheit für Wasser auf, und wobei die zweite Aufbewahrungseinheit für Wasser so gehalten ist, dass sie über der ersten Aufbewahrungseinheit für Wasser angeordnet ist, so dass Wasser von der zweite Aufbewahrungseinheit in die erste Aufbewahrungseinheit fließen kann. Folglich kann in einem Fall, bei dem zu viel Wasser in die zweite Aufbewahrungseinheit für Wasser eingefüllt wird, das Wasser automatisch in die erste Aufbewahrungseinheit für Wasser fließen, so dass das Wasser effizient genutzt werden kann.

Gemäß einem Aspekt der Erfindung weist die Tragstruktur eine Halterung auf, mit der die Pflanzanordnung an einer Brüstung, insbesondere eines Balkons, festgelegt werden kann. Somit kann die Pflanzanordnung an einer Brüstung festgelegt werden, ohne dass die Pflanzanordnung direkten Kontakt mit dem Boden hat. Die Halterung kann eine hakenartige Form haben. Die Brüstung kann beispielsweise ein Geländer eines Balkons sein. Ferne kann die Brüstung auch vor einem Fenster vorgesehen sein (z.B. in Form eines sogenannten "französischen Balkons"). Die Pflanzanordnung kann so an der Brüstung angeordnet sein, dass die modulare Halteanordnung einen Winkel zu der Brüstung von im Wesentlichen 90° einnimmt. Die Halterung kann integral mit der Tragstruktur gebildet sein. Somit kann die Pflanzanordnung auch in Bereichen vorgesehen werden, in denen wenig Platz vorhanden ist.

Gemäß einem weiteren Aspekt der Erfindung wird ein Verfahren zum Arrangieren einer Pflanzanordnung bereitgestellt, umfassend die folgenden Schritte:
Bereitstellen einer Pflanzanordnung gemäß einem der vorhergehenden Ansprüche,
Austauschen zumindest eines Pflanzbehälters in die Haltevorrichtung.

Somit kann auf einfache Weise die Pflanzanordnung neu arrangiert werden. Dabei ist durch die individualisierte Anpassung der Pflanzbehälter auf die darin aufgenommene Pflanze stets sichergestellt, dass alle Pflanzen optimale Wachstumsbedingungen haben. Damit ist nicht nur das Anlagen einer Pflanzanordnung erleichtert, sondern auch deren Pflege.

Gemäß einem Aspekt der Erfindung umfasst das Verfahren ferner den folgenden Schritt: Platzieren eines Möbelstücks, insbesondere eines Tischs, einer Bar, einer Seitzbank oder eines Regals, auf zumindest einem Auflageabschnitt der Pflanzanordnung, so dass das Möbelstück von der Pflanzanordnung getragen ist.

Durch die Kombination von Möbelstück und Pflanzanordnung kann eine besonders platzsparende Aufstellung beider Elemente erreicht werden. Somit ist auch bei beengten Platzverhältnissen ein Vorsehen von lebenden Pflanzen mit optimalen Wachstumsbedingungen möglich.

Einzelne Aspekte können mit andern Aspekten Kombiniert werden. Ferner gelten aller Vorteile der Vorrichtung analog auch für das Verfahren und anders herum. Weitere Vorteile ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsformen können dabei im Rahmen der Erfindung miteinander kombiniert werden.

In den Figuren zeigt:
- **Fig. 1**: eine perspektivische Explosionsdarstellung einer Pflanzanordnung gemäß einer Ausführungsform der vorliegenden Erfindung,
- **Fig. 2**: eine perspektivische Darstellung einer Pflanzanordnung gemäß einer Ausführungsform der vorliegenden Erfindung,
- **Fig. 3**: eine perspektivische Darstellung eines Teils einer Pflanzanordnung gemäß einer Ausführungsform der vorliegenden Erfindung,
- **Fig. 4**: eine perspektivische Darstellung einer Pflanzanordnung gemäß einer Ausführungsform der vorliegenden Erfindung, und
- **Fig. 5**: eine perspektivische Darstellung einer Pflanzanordnung gemäß einer Ausführungsform der vorliegenden Erfindung.

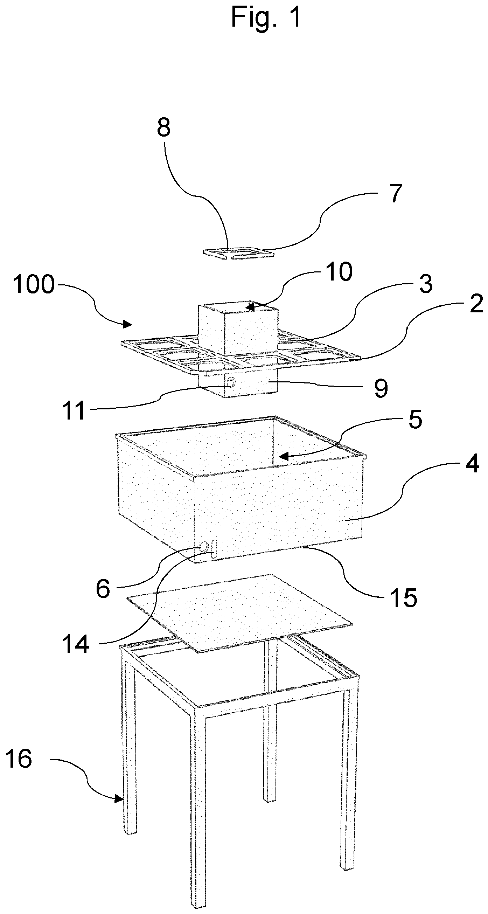

**Fig. 1** ist eine perspektivische Explosionsdarstellung einer Pflanzanordnung 100 gemäß einer Ausführungsform der vorliegenden Erfindung. Die Pflanzanordnung 100 umfasst eine erste Halteanordnung 2 mit einer Vielzahl von ersten Halterungen 3, die als Öffnungen in der plattenartigen Halteanordnung 2 ausgebildet sind. In jede Halterung 3 kann ein Pflanzbehälter 1 (nicht in Fig. 1 dargestellt) eingesetzt werden. Ferner umfasst die Pflanzanordnung 100 eine erste Tragstruktur 4, die die erste Halteanordnung 2 trägt. Bei der vorliegenden Ausführungsform sind neun erste Halterungen 3 in der Halteanordnung 2 gebildet. Die ersten Halterungen 3 sind in einer rechteckigen Anordnung vorgesehen, so dass entlang einer ersten Richtung drei Halterungen 3 und entlang einer orthogonal zu der ersten Richtung verlaufenden zweiten Richtung auch drei Halterungen 3 vorgesehen sind. In der mittig angeordneten ersten Halterung 3 ist bei der vorliegenden Ausführungsform eine zweite Tragstruktur 9 eingefügt und gehalten. Dabei erstreckt sich die zweite Tragstruktur 9 von der ersten Halteanordnung 2 weg, sodass eine von der zweiten Tragstruktur 9 getragene zweite Halteanordnung 7 über der ersten Halteanordnung 2 getragen ist. Die zweite Halteanordnung 7 kann von der zweiten Tragstruktur 9 getragen werden. Die zweite Halteanordnung 7 ist genauso ausgestaltet wie die erste Halteanordnung 2 mit dem Unterschied, dass die zweite Halteanordnung 7 lediglich eine zweite Halterung 8 aufweist. Die zweite Halterung 8 ist dazu ausgestaltet, einen Pflanzbehälter 1 aufzunehmen.

Die zweite Tragstruktur 9 ist bei der vorliegenden Ausführungsform analog zu der ersten Tragstruktur 4 ausgebildet mit dem Unterschied, dass die zweite Tragstruktur 9 kleiner ist als die erste Tragstruktur 4. Die zweite Halteanordnung 7 ist herausnehmbar an der zweiten Tragstruktur 9 angeordnet und die zweite Tragstruktur 9 ist herausnehmbar an der ersten Halteanordnung 2 angeordnet. Letztlich ist die erste Halteanordnung 2 herausnehmbar an der ersten Tragstruktur 4 angeordnet. Ferner ist in Fig. 1 ein Möbelstück 16 dargestellt. Die Pflanzanordnung 100 ist dabei so ausgestaltet, dass sie auf dem Möbelstück 16 Platz findet. Das Möbelstück 16 ist bei der vorliegenden Ausführungsform ein Tisch aus Aluminium.

Die erste Tragstruktur 4 ist bei dieser Ausführungsform als ein Behälter oder Container mit massiven Seitenwänden ausgebildet. In eine Öffnung der ersten Tragstruktur 4 kann die erste Halteanordnung 2 angebracht werden. Somit ragen Pflanzbehälter 1, die an der ersten Halteanordnung 2 angebracht sind, in das Innere der ersten Tragstruktur 4 hinein. Ferner weist die Tragstruktur 4 eine rechteckige Grundfläche 15 auf, von der sich die Seitenwände nach oben erheben. In der ersten Tragstruktur 4 ist eine erste Aufbewahrungseinheit für Wasser 5 gebildet. Genauer gesagt ist der untere Teil der ersten Tragstruktur 4 als die erste Aufbewahrungseinheit für Wasser 5 ausgestaltet, so dass sich das Wasser über die gesamte freie Grundfläche 15 der ersten Tragstruktur 4 erstrecken kann. Ferner weist die erste Tragstruktur 4 einen ersten Überlauf 11 auf, der den maximalen Wasserspiegel in der ersten Aufbewahrungseinheit für Wasser 5 begrenzt, indem überschüssiges Wasser aus der Aufbewahrungseinheit für Wasser 5 abgeführt wird. Zudem weist die Pflanzanordnung 100 einen elektronischen Sensor 14 auf, der bestimmen kann ob und wenn ja wieviel Wasser in der Aufbewahrungseinheit für Wasser 5 vorhanden ist. Bei der vorliegenden Ausführungsform geschieht dies durch einen Leitfähigkeitssensor, der mit mehreren Elektroden den Wasserstand in der Aufbewahrungseinheit für Wasser 5 messen kann. Diese Information wird dann über eine nicht dargestellte Anzeigeeinheit an den Nutzer weiteregegeben. In einer weiteren Ausführungsform kann die Pflanzanordnung 100 diese Information auch kabellos beispielsweise auf ein Smartphone des Nutzers übertragen. Genau wie die erste Tragstruktur 4 weist auch die zweite Tragstruktur 9 eine Aufbewahrungseinheit für Wasser 10 und einen zweiten Überlauf 11 auf. Somit kann analog zu der ersten Aufbewahrungseinheit für Wasser 5 der Wasserstand auch in der zweiten Aufbewahrungseinheit für Wasser 10 kontrolliert und gesteuert werden.

In einer weiteren nicht dargestellten Ausführungsform weist die zweite Halteanordnung vier oder mehr zweite Halterungen auf. Dabei können die zweiten Halterungen kleiner sein als die ersten Halterungen. Alternativ kann die zweite Tragstruktur sich über einen größeren Beriech der ersten Halteanordnung erstrecken, so dass die erste Halteanordnung beispielsweise fünf erste Halterungen aufweist und die zweite Halteanordnung vier zweite Halterungen aufweist, wobei die ersten Halterungen und die zweiten Halterungen gleich groß sind.

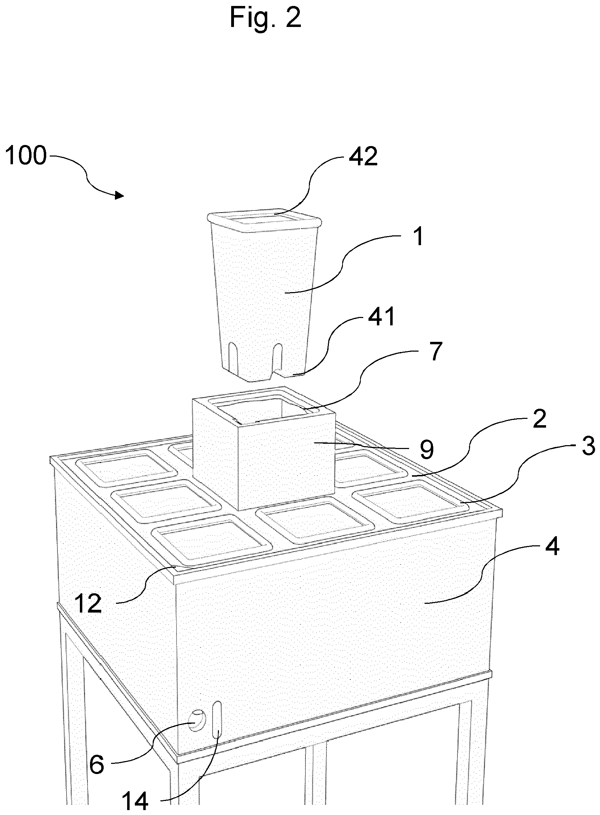

**Fig. 2** ist eine perspektivische Darstellung der zuvor beschriebenen Pflanzanordnung 100, in die gerade ein Pflanzbehälter 1 in die zweite Halteanordnung 7 eingesetzt wird. Der Behälter ist ein formstabiler Kunststoffbehälter, der eine Oberseite 42 und eine Bodenseite 41 aufweist. Von der Oberseite 42 bis zu der Bodenseite 41 verringert der Pflanzbehälter seinen Querschnitt. An der Oberseite 42 hat der Pflanzbehälter einen Kragen, der mit der ersten Halterung 3 oder der zweiten Halterung (wie in dem dargestellten Fall) zusammenwirkt, um den Pflanzbehälter 1 zu halten.

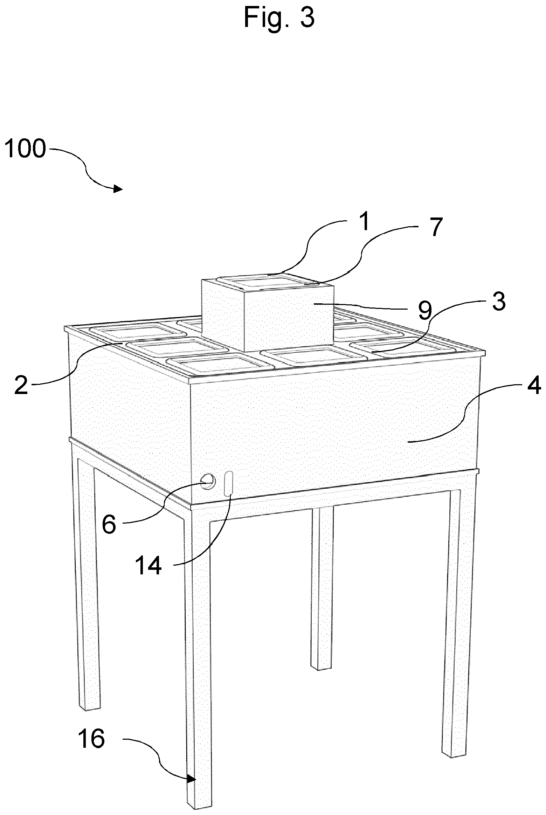

**Fig. 3** ist eine perspektivische Darstellung einer Pflanzanordnung gemäß einer Ausführungsform der vorliegenden Erfindung mit eingesetzten Pflanzbehältern 1. Dabei sind acht Pflanzbehälter 1 in die ersten Halterungen 3 der ersten Halteanordnung 2 eingesetzt und ein Pflanzbehälter ist in die zweite Halterung 8 der zweiten Halteranordnung 7 eingesetzt.

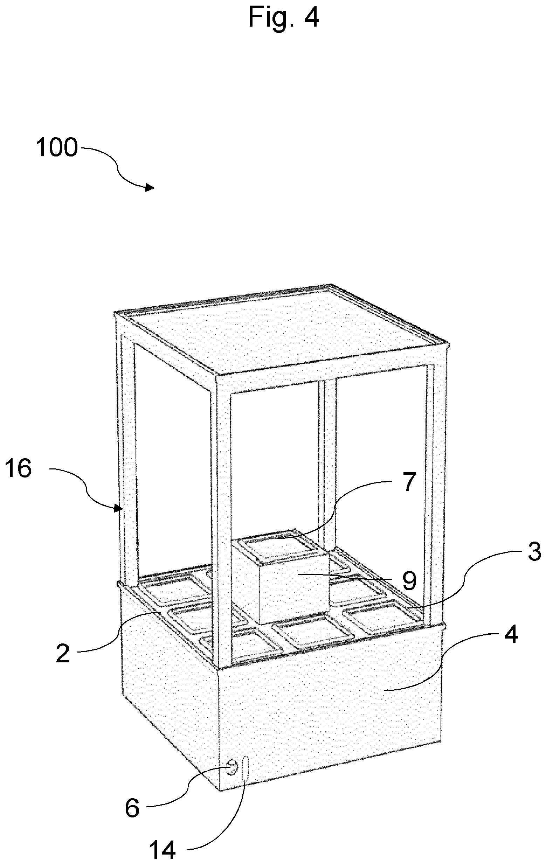

**Fig. 4** ist eine perspektivische Darstellung einer Pflanzanordnung 100 gemäß der obigen Ausführungsform in einer anderen Betriebsstellung. Im Vergleich zu der in Fig. 6 dargestellten ersten Betriebsstellung, bei der die Pflanzanordnung 100 auf dem Möbelstück 16 platziert ist, stellt die in Fig. 7 dargestellte zweite Betriebsstellung eine umgekehrte Stellung dar, bei der das Möbelstück 16 via vier Auflageabschnitte 12 auf der Pflanzanordnung 100 positioniert ist. Die Auflageabschnitte 12 befinden sich je an einer Ecke der ersten Tragstruktur 4 und leiten die Last durch das Möbelstück in den Untergrund ab.

In einer weiteren nicht dargestellten Ausführungsform weist die erste Tragstruktur 4 eine Befestigung 19 auf, mit der die erste Tragstruktur an Bauelementen wie beispielsweise eine Balkonbrüstung anbringbar ist. Die Befestigung 19 umfasst in der vorliegen Ausführungsform zwei U-förmige Abschnitte, die an einem Vorsprung oder einer Mauer festlegbar sind. Die übrigen Merkmale der vorliegenden Ausführungsform entsprechen den der zuvor beschriebenen Ausführungsformen.

In einer weiteren nicht dargestellten Ausführungsform weist die Pflanzanordnung 100 einen Pflanzbehälter auf, der ein Bienenhaus 17 umfasst oder gänzlich als Bienenhaus 17 ausgestaltet ist. Mit anderen Worten kann ein Bienenhaus 17 in einer der ersten Halterungen 3 oder in die zweite Halterung 9 eingesetzt werden. Dazu weist das Bienenhaus 17 zumindest teilweise dieselbe Ausgestaltung auf wie ein Pflanzbehälter 1. Daher können nicht nur Pflanzbehälter 1 mit unterschiedlichen Pflanzen 18 ohne Weiteres ausgetauscht und neu arrangiert werden, sondern auch andere Elemente wie das Bienenhaus 17 oder eine nicht dargestellte Vogeltränke.

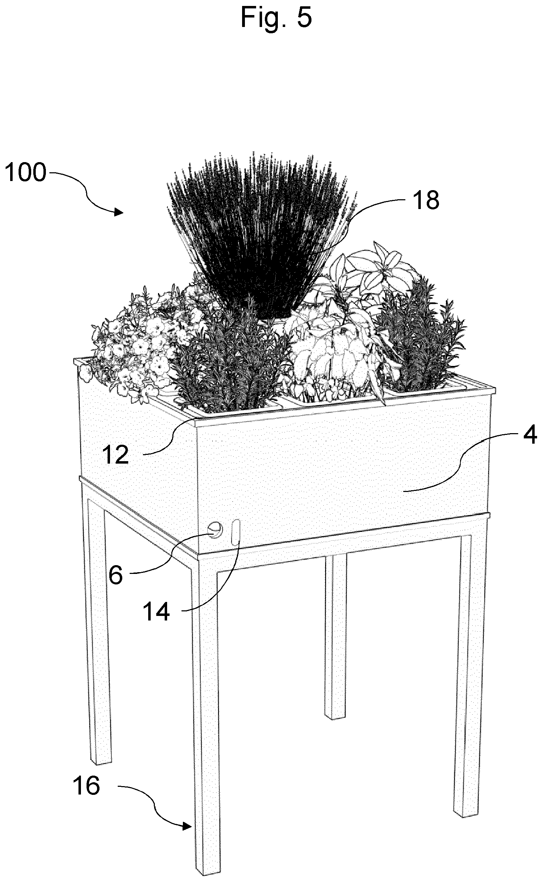

**Fig. 5** ist eine perspektivische Darstellung einer Pflanzanordnung 100 gemäß einer weiteren Ausführungsform der vorliegenden Erfindung. In Fig. 10 ist eine Pflanzanordnung mit arrangierten Pflanzbehältern 1 dargestellt, die alle zumindest eine Pflanze 18 umfassen. Zu erkennen ist, dass durch die unterschiedliche Höhen der ersten Halteanordnung 2 und der zweiten Halteanordnung 7 unterschiedlich hohe Pflanzen zur selben Geltung gebracht werden können, wodurch der Gesamteindruck der Pflanzanordnung 100 verbessert ist. Ferner ist zu erkennen, dass der Bewässerungszugang 12 in einer Ecke der ersten Halteanordnung gut zugänglich bleibt, selbst wenn die Pflanzanordnung voll bepflanzt ist.

### Bezugszeichenliste

- 100: Pflanzanordnung
- 1: Pflanzbehälter
- 2: erste Halteanordnung
- 3: erste Halterung
- 4: erste Tragstruktur
- 5: erste Aufbewahrungseinheit für Wasser
- 6: erster Überlauf
- 7: zweite Halteanordnung
- 8: zweite Halterung
- 9: zweite Tragstruktur
- 10: zweite Aufbewahrungseinheit für Wasser
- 11: Zweiter Überlauf
- 12: Auflageabschnitt
- 13: Bewässerungszugang
- 14: Sensor
- 15: Grundfläche
- 16: Möbelstück
- 17: Bienenhaus
- 18: Pflanze
- 19: Befestigung
- 41: Bodenseite
- 42: Oberseite

## Patentansprüche

1. Pflanzanordnung (100), umfassend:
eine erste modulare Halteanordnung (2), insbesondere eine Kulisse, die mindestens eine Halterung (3) für die Aufnahme eines auswechselbaren Pflanzbehälters (1) aufweist,
eine erste Tragstruktur (4) zum Tragen der ersten Halteanordnung (2), wobei die Tragstruktur (4) eine ersten Aufbewahrungseinheit für Wasser (5) aufweist, die so an der Tragstruktur (4) angeordnet ist, dass die erste Aufbewahrungseinheit für Wasser (5) unterhalb der ersten Halteanordnung (2) angeordnet ist, und
mindestens einen Pflanzbehälter (1) mit einer Bodenseite (41) und einer offenen Oberseite (42), wobei der Pflanzbehälter (1) an der Halterung (3) auswechselbar anbringbar ist, so dass sich die Bodenseite (41) unterhalb der Halteanordnung (2) befindet.

2. Pflanzanordnung (100) gemäß Anspruch 1, wobei die Tragstruktur (4) und/oder die Halteanordnung (2) zumindest einen Auflageabschnitt (12) aufweist oder aufweisen, der dazu ausgestaltet ist, ein Möbelstück (16), insbesondere einen Tisch, eine Bar, eine Sitzbank oder ein Regal, zu halten, so dass das Möbelstück (16) von der Pflanzanordnung (100) getragen ist.

3. Pflanzanordnung (100) gemäß einem der vorhergehenden Ansprüche, wobei ein elektronischer Sensor (14) an der Tragstruktur (4) angeordnet ist und dazu ausgestaltet ist, Wasser, insbesondere einen Wasserstand, in der Aufbewahrungseinheit für Wasser (5) zu erfassen.

4. Pflanzanordnung (100) gemäß einem der vorhergehenden Ansprüche, wobei die Halteanordnung (2) zumindest einen Bewässerungszugang (12) aufweist, über den der Aufbewahrungseinheit für Wasser (5), insbesondere direkt, Wasser zugeführt werden kann.

5. Pflanzanordnung (100) gemäß einem der vorhergehenden Ansprüche, wobei sich ein Querschnitt des zumindest einen Pflanzbehälters (1) von der Oberseite (41) zu der Bodenseite (42) des Pflanzbehälters (1) verkleinert.

6. Pflanzanordnung (100) gemäß einen der vorhergehenden Ansprüche, wobei der mindestens eine Pflanzbehälter (1) ein erdloses Substrat und/oder ein Drainagematerial umfasst.

7. Pflanzanordnung (100) gemäß einen der vorhergehenden Ansprüche, wobei der zumindest eine Pflanzbehälter (1) eine Wasserschale und/oder ein Bienenhaus (17) umfasst, wobei die Wasserschale und/oder das Bienenhaus (17) vorzugsweise integral mit dem Pflanzbehälter (1) gebildet ist/sind.

8. Pflanzanordnung (100) gemäß einem der vorhergehenden Ansprüche, wobei der Pflanzbehälter (1) zumindest eine Seitenwand zwischen der Bodenseite (41) und der Oberseite (42) des Pflanzbehälters (1) aufweist, an der Öffnungen vorgesehen sind, durch die Wasser hindurchtreten kann.

9. Pflanzanordnung (100) gemäß einem der vorhergehenden Ansprüche, wobei zumindest zwei Pflanzbehälter (1) vorgesehen sind, die ein unterschiedliches Volumen aufweisen.

10. Pflanzanordnung (100) gemäß einem der vorhergehenden Ansprüche, ferner umfassend:
eine zweite modulare Halteanordnung (7), insbesondere eine Kulisse, die mindestens eine zweite Halterung (8) für die Aufnahme eines auswechselbaren Pflanzbehälters (1) aufweist,
eine zweite Tragstruktur (9) zum Tragen der zweiten Halteanordnung (7), und
mindestens einen Pflanzbehälter (1) mit einer Bodenseite (41) und einer offenen Oberseite (42), wobei der Pflanzbehälter (1) an der zweiten Halterung (8) auswechselbar anbringbar ist, so dass sich die Bodenseite (41) unterhalb der zweiten Halteanordnung (7) befindet,
wobei die zweite Tragstruktur (9) von der ersten Tragstruktur (4) und/oder der ersten Halteanordnung (2) getragen ist.

11. Pflanzanordnung (100) gemäß Anspruch 10, wobei die zweite Halteanordnung (7) und die erste Halteanordnung (2) so gehalten sind, dass sie sich auf unterschiedlichen Höhen befinden.

12. Pflanzanordnung (100) gemäß Anspruch 10 oder 11, wobei die zweite Tragstruktur (9) eine zweite Aufbewahrungseinheit für Wasser (10) aufweist, und wobei die zweite Aufbewahrungseinheit für Wasser (10) so gehalten ist, dass sie über der ersten Aufbewahrungseinheit für Wasser (5) angeordnet ist, so dass Wasser von der zweite Aufbewahrungseinheit (10) in die erste Aufbewahrungseinheit (5) fließen kann.

13. Pflanzanordnung gemäß einer der vorhergehenden Ansprüche, wobei die Tragstruktur (4) eine Halterung aufweist, mit der die Pflanzanordnung an einer Brüstung, insbesondere eines Balkons, festgelegt werden kann.

14. Verfahren zum Arrangieren einer Pflanzanordnung (100), umfassend die folgenden Schritte:
Bereitstellen einer Pflanzanordnung (100) gemäß einem der vorhergehenden Ansprüche,
Austauschen zumindest eines Pflanzbehälters (1) in die Haltevorrichtung.

15. Verfahren gemäß Anspruch 14, wobei das Verfahren ferner den folgenden Schritt umfasst:
Platzieren eines Möbelstücks (16), insbesondere eines Tischs, einer Bar, einer Seitzbank oder eines Regals, auf zumindest einem Auflageabschnitt (12) der Pflanzanordnung (100), so dass das Möbelstück (16) von der Pflanzanordnung (100) getragen ist.
